# EUROPEAN PATENT SPECIFICATION

(11) **EP 1 519 499 B1**
(45) Date of publication and mention of the grant of the patent: **13.12.2006**
(21) Application number: 04255617.5
(22) Date of filing: 16.09.2004
(51) Int. Cl.: H04B 10/155

(54) **System and method for generating multilevel coded optical signals**
System und Verfahren zum Erzeugen von multiniveau-kodierten optischen Signalen
Système et méthode pour générer des signaux optiques codés au plusieurs niveaux

(30) Priority: 29.09.2003 US 673933
(43) Date of publication of application: 30.03.2005
(73) Proprietor: LUCENT TECHNOLOGIES INC., Murray Hill, New Jersey 07974-0636 (US)
(72) Inventor: Yuan Hua Kao, Holmdel,Monmouth New Jersey 07733 (US); Xiang, Liu, Marlboro, New Jersey 07746 (US); Xing, Wei, New Providence, New Jersey 07974 (US)
(74) Representative: Sarup, David Alexander

(56) References cited:
- US-A1- 2003 058 504
- US-A1- 2003 147 646
- OHM M ET AL: "Quaternary optical ASK-DPSK and receivers with direct detection" IEEE PHOTONICS TECHNOLOGY LETTERS, IEEE INC. NEW YORK, US, vol. 15, no. 1, January 2003 (2003-01), pages 159-161, XP002967126 ISSN: 1041-1135
- NAN CHI ET AL: "Transmission performance of all-optically labelled packets using ASK/DPSK orthogonal modulation" LEOS 2002. 15TH. ANNUAL MEETING OF THE IEEE LASERS & ELECTRO-OPTICS SOCIETY. GLASCOW, SCOTLAND, NOV. 11 - 12, 2002, ANNUAL MEETING OF THE IEEE LASERS AND ELECTRO-OPTICS SOCIETY, NEW YORK, NY : IEEE, US, vol. VOL. 1 OF 2, 11 November 2002 (2002-11-11), pages 51-52, XP010620407 ISBN: 0-7803-7500-9

## Description

### Field of the Invention

The present invention relates generally to wavelength division multiplexed (WDM) optical transmission, and more specifically to a system and method for generating multilevel coded optical signals.

### Background of the Invention

Multilevel amplitude-shift-keying (M-ary ASK) provides a means for increasing the information spectral density or the capacity of a transmission system. M-ary ASK also substantially improves system tolerance to chromatic dispersion and polarization-mode-dispersion (PMD) by lowering the symbol rate for a given bit rate.

Quaternary (4-ary) ASK modulation formats have been proposed and demonstrated in the prior art. In a 4-ary ASK format, each symbol has four different optical intensities but the same phase. Such a format is discussed in Walklin and Conradi, "Multilevel Signaling For Increasing The Reach of 10 Gb/s Lightwave Systems", Journal of Lightwave Technologies, Vol. 17, pp. 2235-2248 (1999), which is incorporated herein by reference. This format, however, suffers a large power penalty as compared to a conventional binary format with the same overall data rate, which precludes the use of 4-ary ASK for conventional DWDM transmissions. The performance of this format as compared to conventional formats is discussed in detail by Conradi in Chapter 16 of Optical Fiber Telecommunications IVB, Academic Press, which is incorporated herein by reference.

Differential quadrature phase-shift-keying (DQPSK) is another multilevel modulation format, which offers improved tolerance to dispersion and PMD with good receiver sensitivity. DQPSK, however, requires more complex transmitters and receivers as compared to other formats. In the DQPSK format, each symbol has four equally spaced phases but the same intensity. This format is discussed in R. A. Griffin et al., "Optical Differential Quadrature Phase-Shift Key (oDQPSK) For High Capacity Optical Transmission", Proceedings of OFC 2002 pp. 367-368 (2002).

A quaternary optical modulation scheme which is a combination of ASK and DPSK with direct detection (DD) is described in M. Ohm et al., "Quaternary Optical ASK-DPSK and Receivers With Direct Detection," IEEE Photonics Tech. Letters, Vol. 15, No.1, January 2003, pp. 159-161. Both modulator and demodulator structures operating in accordance with this scheme are described therein.

### Summary of the Invention

A method and apparatus according to the present invention are set out in the independent claims, to which the reader is now referred. Preferred features are laid out in the dependent claims.

The present invention provides a system and method for generating an optical multilevel signal by differential-phase amplitude-shift keying (DP-ASK) modulation in which two sets of data, one modulated using differential-phase-shift-keying (DPSK) and the other modulated using amplitude-shift-keying (ASK), are modulated and transmitted simultaneously yet independently at a single wavelength. Both the intensity and phase of a CW carrier are modulated to provide four possible symbols for a given information bit.

In one embodiment, a method comprises the step of driving at least two modulators with at least two synchronous data signals having the same data rate to generate an optical signal using differential phase shift keying and amplitude shift keying modulation.

In another embodiment an optical transmission system is provided comprising an optical 4-ary DP-ASK transmitter including at least two modulators adapted to provide an optical 4-ary DP-ASK modulated signal. The system also includes an optical receiver including a DPSK receiver that includes a delay interferometer and a balanced receiver to detect a DPSK modulated portion of the 4-ary DP-ASK modulated signal. The receiver also includes an optical intensity receiver to detect an ASK modulated portion of the 4-ary DP-ASK modulated signal.

### Brief Description of the Drawing

FIG. 1 is a diagram depicting one embodiment of an optical system according to the invention.
FIG. 2 is a plot illustrating a constellation diagram of 4-ary DP-ASK symbols.
FIGS. 3a-b are the received electrical eye diagrams of a DPSK portion and an ASK portion of a DP-ASK back-to-back transmission in accordance with an embodiment of the invention.
FIG. 4 is a plot showing the measured BER performance of a system according to an embodiment of the invention.
FIGS. 5a-b are plots showing the measured BER performance and the measured signal spectrum of a system according to an embodiment of the invention.
FIGS. 6a-b are the received electrical eye diagrams of a DPSK portion and an ASK portion of a return-to-zero (RZ) DP-ASK back-to-back transmission in accordance with an embodiment of the invention.
FIG. 7 is a plot showing the measured BER performance of a system in accordance with an embodiment of the invention.
FIG. 8 is a schematic diagram illustrating the use of pre-emphasis through chirped ASK to combat differential-phase eye closure penalty resulting from self-phase modulation (SPM) during nonlinear transmissions.
FIG. 9 is a schematic diagram illustrating the use of post nonlinear phase shift compensation (post-NPSC) to compensate for the differential-phase closure resulting from SPM during nonlinear transmissions.

### Detailed Description of the Invention

In preferred embodiments, the present invention provides a system and method for generating optical 4-ary DP-ASK signals for transmission in an optical transmission system using two modulators, one for DPSK modulation and the other for ASK modulation. Such a system allows for the simultaneous yet independent transmission and reception of two data tributaries. Preferably, the two data tributaries have the same data rate and are modulated synchronously such that the bit centers of the two tributaries are aligned in time (to avoid the distortion at the center of ASK bits during the transition between adjacent DPSK bits).

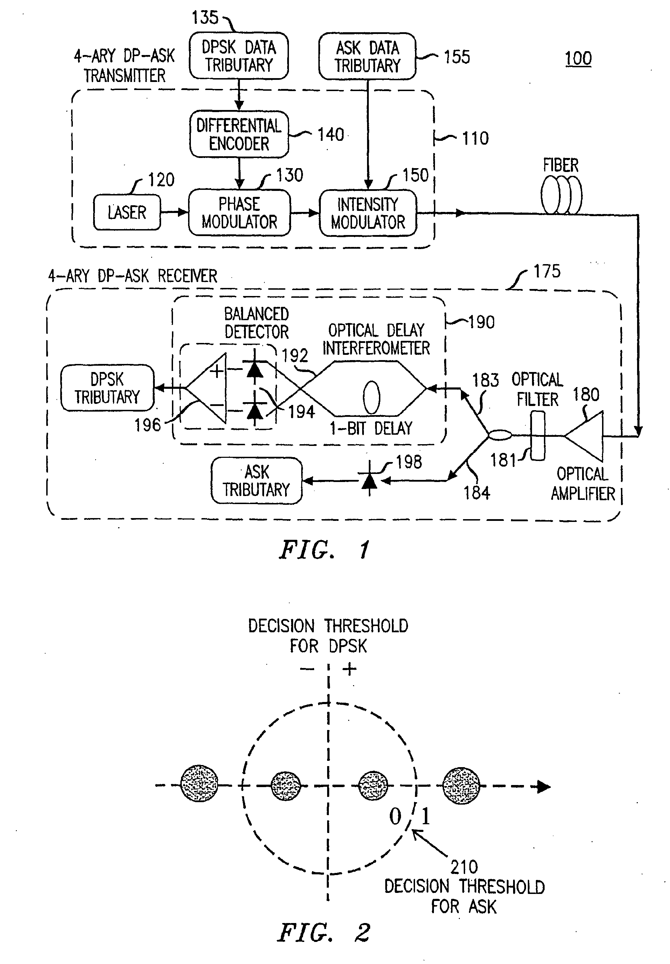

A 4-ary DP-ASK transmitter 110 of one embodiment of a system 100 according to the invention is illustrated in FIG. 1. The light from a laser 120 is first DPSK modulated using one data tributary 135 using a phase modulator 130 which can be a single-waveguide phase modulator, a Mach-Zehnder modulator (MZM) that is biased at null to achieve phase modulation, or the like. The MZM can be made from a variety of electro-optic materials, for example, LiNbO₃, and is preferably biased at its null point to switch the phase of the light signal between 0 and π. A chirp-free MZM is preferred because it produces the DPSK signal with perfect phase values (0 and π).

DPSK encoding is preferably performed using a differential encoder 140 before modulation. An intensity modulator 150 then modulates the DPSK signal using a second data tributary 155. Preferably, the intensity modulator 150 is driven to produce an extinction ratio (ER) of about 6 to 9 dB. The intensity modulator 150 can be a MZM, an electro-absorption modulator (EAM), or the like. For a MZM, a low ER can be achieved by under-driving the MZM and shifting the bias point away from the quadrature point. For modulation with an EAM, a low ER can be achieved by shifting the bias point. The order of the DPSK and ASK modulation of an optical signal may be reversed while still providing a DP-ASK signal according to the invention.

The system 100 preferably also includes a receiver 175. An erbium-doped fiber amplifier 180 (EDFA) is preferably used in the receiver 175 as an optical pre-amplifier. An optical filter 181 is preferably provided after the pre-amplifier 180 to reduce the penalty from amplified-spontaneous-emission (ASE) noise. The amplified signal is then preferably separated into two paths 183, 184. One path 183 transmits the signal to a DPSK receiver 190. The DPSK receiver 190 preferably comprises a one-bit delay interferometer 192, a balanced detector 194, and a differential RF amplifier 196 for detection of the DPSK tributary (i.e., the DPSK modulated portion or component of the signal). The one-bit delay interferometer 192 is preferably provided to divide the light on path 183 into two arms and delay one arm by about one bit period. It can be understood by those skilled in the art that the delay provided by the delay interferometer 192 can vary from precisely one bit period while still providing sufficient delay in accordance with the invention. Preferably, the delay provided by the delay interferometer 192 is between about 0.8 and about 1.2 times the bit period.

The other path 184 transmits the signal to an ASK detector 198 for detection of the ASK tributary portion of the signal.

FIG. 2 is a plot illustrating the constellation diagram of four symbols of 4-ary DP-ASK modulation. In the diagram, the x-axis represents the real part of the optical field, and the y-axis represents the imaginary part of the optical field. The DPSK data tributary is recovered by setting the decision threshold at the y-axis to compare the signs (or phases) of adjacent bits, which can be realized by using a delay interferometer 192 and a balanced detector 194 and setting the decision threshold at 0. For example, if two adjacent bits have the same (or opposite) sign, then "1" (or "-1") is determined. The ASK data tributary is preferably retrieved by setting the decision threshold at the circle 210 with a radius that is the mean of the larger and smaller amplitude of the symbols.

An embodiment of the invention has been demonstrated experimentally with an aggregate 20-Gb/s non-return-to-zero (NRZ) 4-ary DP-ASK signal. The cw source 120 used was a tunable laser operating at 1550 nm. A 10-Gb/s DPSK tributary was modulated on the cw light by a MZM that is biased at null and driven at 2V_{π} to achieve phase modulation. The light was then intensity modulated with ~8 dB ER to carry a 10-Gb/s ASK tributary. It was found that the ER of the ASK modulation is more preferably about 9.5 dB to achieve equal receiver sensitivity for the two data tributaries. The optical signal-to-noise (OSNR) requirement at a given BER for a 4-ary DP-ASK was determined to be only about 1dB higher than that for a binary on-off-keying (OOK) format with the same overall data rate. Compared with 4-ary ASK with quadratic power levelling, 4ary DP-ASK requires about 4.5 dB less OSNR for a given BER.

Due to the limited dynamic range of the DPSK receiver used in the experiment it was determined that the preferred ER is about 8 dB. The low ER was achieved by under-driving MZM at about 0.9V_{π}, and shifting the bias point away from the quadrature point of the MZM by about 0.05 V_{π}.

To simplify the transmitter, a commercial chirp-free two-stage integrated MZ modulator was used. The bandwidths of the two MZMs were about 10 GHz. The total insertion loss of the transmitter was about 5.5 dB.

At the receiver 175, an EDFA with about 4.5 dB NF was used as the optical pre-amplifier 180. The optical filter 181 after the pre-amplifier 180 had a 3-dB bandwidth of 100-GHz. The amplified signal was split into two signals, one entering a DPSK receiver 190 comprising a 100-ps delay interferometer 192, a balanced detector 194, and a differential RF amplifier 196, and the other entering an ASK detector. The effective RF bandwidths of the two receivers were about 7 GHz.

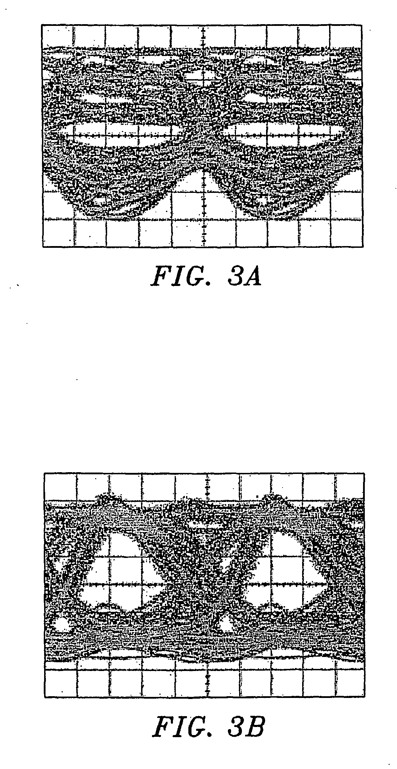

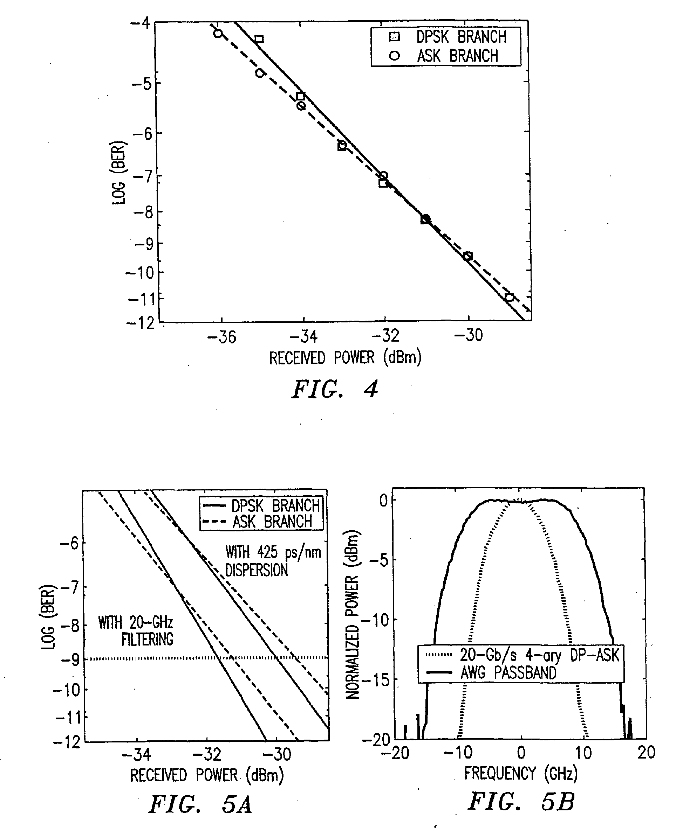

FIGS. 3a-b show the eye diagrams detected at the DPSK and ASK receivers 190, 198. For the DPSK tributary, with the use of the balanced detector 194, the decision level was fixed at 0. FIG. 4 shows the BER performance of both DPSK and ASK vs. the received optical power (before the pre-amplifier).

A pulse pattern generator was used to produce a data stream that consisted of pseudorandom bit sequences (PRBS) with a pattern length of 2⁷-1, and its inverted copy. The DPSK modulator 130 was driven by the data and the ASK modulator 150 by the inverted data which was delayed by ∼30 bits to de-correlate the two data streams to the modulators 130, 150. It is understood that inverted/delayed data was used only for the experimental purpose of generating two data tributaries.

Receiver sensitivity (at BER= 10⁻⁹) of -30.5 dBm was achieved for both DPSK and ASK receivers 190, 198. The sensitivity was about 6 dB worse than that of 10-Gb/s binary NRZ (for the experimental embodiment), or about 2 dB worse than the theoretically predicted performance, mainly due to the limited dynamic range of the DPSK receiver 190.

4-ary DP-ASK is understood to have a high tolerance to chromatic dispersion and optical filtering. FIGS. 5a-b show the performance of the 20-Gb/s 4-ary DP-ASK under 425 ps/nm dispersion and under a tight filtering by an arrayed-waveguide-grating (AWG) with 25-GHz channel spacing and ∼20-GHz passband. The dispersion penalties for the DPSK and ASK tributaries were both less than 1 dB, similar to binary 10-Gb/s NRZ transmission. With the filtering, the receiver sensitivities of the DPSK and ASK tributaries were improved by 1 dB and 0.7 dB, respectively. The AWG effectively limits the bandwidth of ASE noise and thus improves the receiver sensitivity. The experimental results also show less than 1dB penalty when the bandwidth is further reduced to 16 GHz, suggesting that 4-ary DP-ASK may be transmitted at greater than about 100% spectral efficiency. The experiment is described in detail in a paper submitted to ECOC'03 by X. Liu, et al., entitled "Quaternary Differential-Phase Amplitude-Shift-Keying For DWDM Transmission".

In another embodiment of the invention the 4-ary DP-ASK modulation can be based on a return-to-zero (RZ) pulse format. RZ 4-ary DP-ASK can provide improved receiver sensitivity as compared to NRZ 4-ary DP-ASK. RZ 4-ary DP-ASK can be realized either optically, by using for example, another modulator (not shown) to generate a pulse at each bit slot, or electrically, by using for example, an RZ pulse generator to provide RZ RF data to drive the intensity modulator 150.

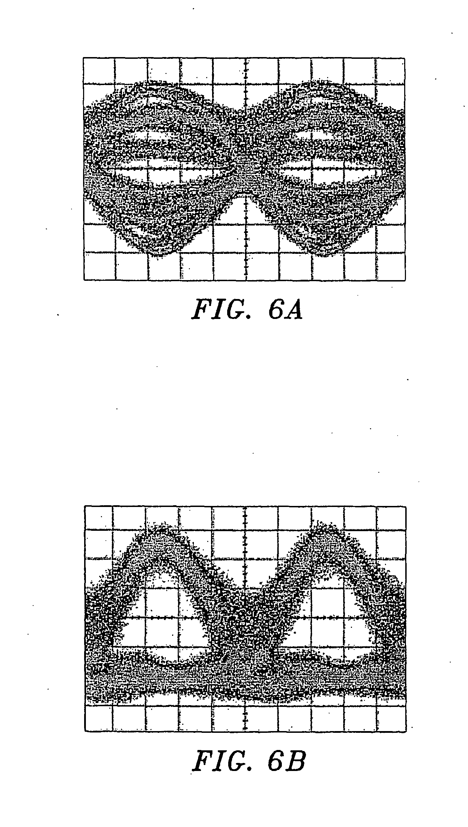

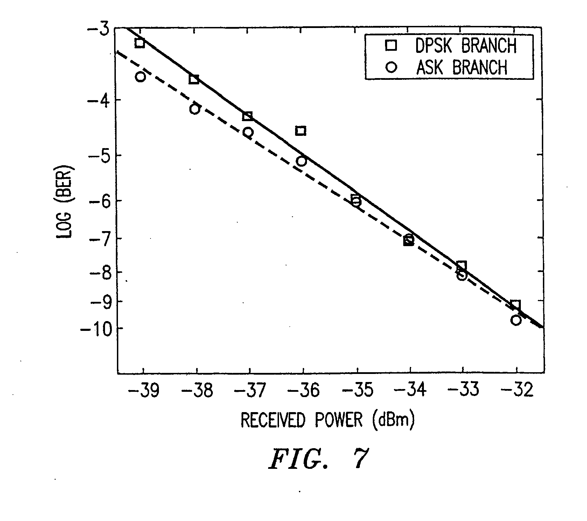

FIGS. 6a-b show the received electrical eye diagrams of the DPSK data tributary and the ASK data tributary of a 20-Gb/s RZ 4-ary DP-ASK back-to-back transmission with pulse generation done electronically. FIG. 7 is a plot showing the measured BER performance of the DPSK tributary and ASK tributary of the 20-Gb/s RZ 4-ary DP-ASK back-to-back transmission. The overall receiver sensitivity of the RZ 4-ary DP-ASK transmission is about 2 dB better than NRZ 4-ary DP-ASK transmission.

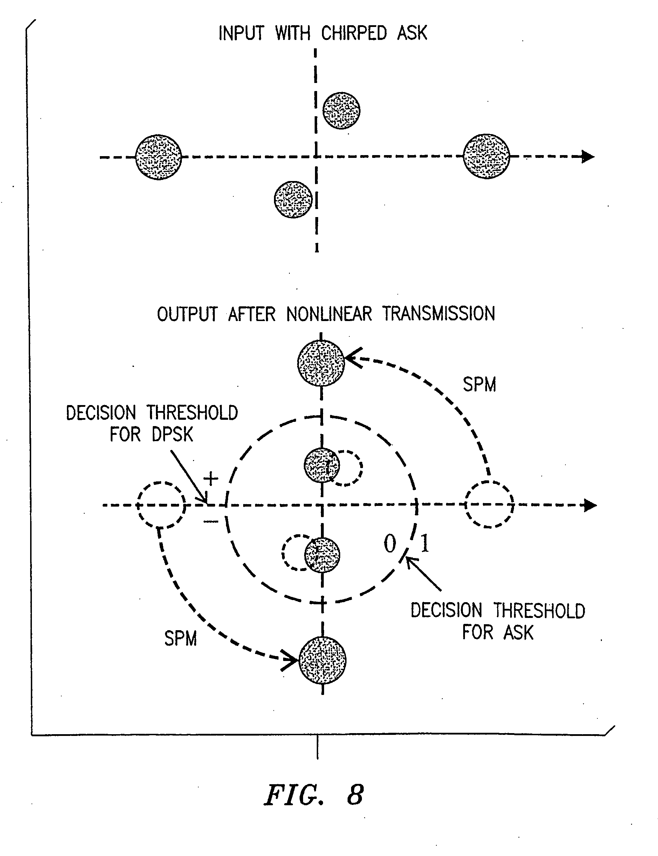

In another embodiment of the invention using 4-ary DP-ASK modulation in nonlinear transmissions, where self-phase-modulation (SPM) induces different phase shifts for signals with different intensities and causes the differential-phase eye closure which degrades the performance of DPSK tributary, pre-emphasis is used to combat the SPM penalty. FIG. 8 is a schematic diagram illustrating the use of pre-emphasis through chirped ASK to combat the SPM penalty. The chirped ASK modulation can be realized by driving one arm of a dual-drive MZM in such a way that any high-intensity "1" has a phase shift which is smaller than the phase shift of a low-intensity "0". By doing so, after nonlinear transmission over which SPM introduces more phase shift to "1s" than to "0s", the overall phases of "1s" and "0s" are close to those in the ideal case (as shown in Fig. 2) for optimal receiver sensitivity. Since an optimum nonlinear phase shift is about 1 radian in nonlinear DPSK transmission, a chirped ASK modulation with an ER between about 5 dB and 9 dB is preferred.

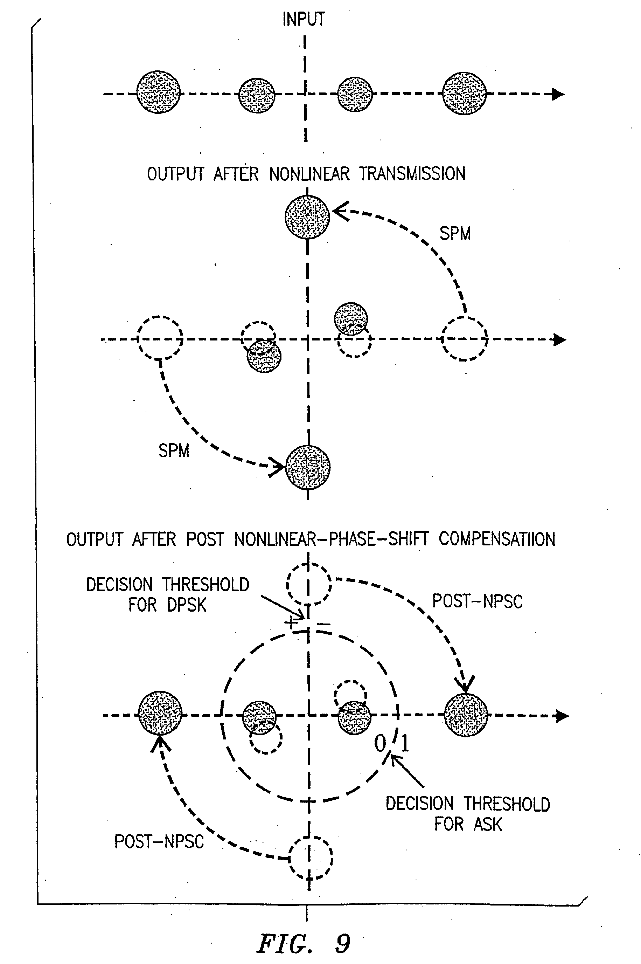

In another embodiment of the invention using 4-ary DP-ASK modulation in nonlinear transmissions, post nonlinear phase shift compensation (post-NPSC) is used to compensate for the SPM-induced differential-phase eye closure. One method of post-NPSC which can be used in accordance with the present invention is disclosed in U.S. patent application, Serial No. 10/331,217, entitled "Nonlinear Phase-Shift Compensation Method And Apparatus". Detailed descriptions of the post-NPSC method can also be found in X. Liu et al., "Improving Transmission Performance In Differential Phase-Shift-Keyed Systems By Use of Lumped Nonlinear Phase-Shift Compensation", Optics Letters, Vol. 27, pp. 1616-1618, (2002), and in C. Xu and X. Liu, "Postnonlinearity Compensation With Data-Driven Phase Modulators In Phase-Shift Keying Transmission", Optics Letters, Vol. 27, pp. 1619-1621 (2002). FIG. 9 is the schematic diagram illustrating the use of post-NPSC to compensate for the differential-phase closure resulting from SPM during nonlinear transmissions.

Although the present invention has been described in accordance with the embodiments shown, one skilled in the art will readily recognize that there could be variations to the embodiments, and that those variations would be within the scope of the present invention as defined by the appended claims.

## Claims

1. A communication method for multilevel coded optical signal transmission which includes the step of driving at least two modulators (130, 150) with respective data signals (135, 155) to generate a multilevel optical signal, **characterized by** the steps of;
performing differential-phase-shift-keying (DPSK) modulation with a first modulator (130) in accordance with a first data signal (135); and
performing amplitude-shift-keying (ASK) modulation with a second modulator (150) in accordance with a second data signal (155),
wherein the first and second data signals (135, 155) are synchronous and have the same data rate.

2. The method of claim 1 further **characterized by** the step of providing post nonlinear-phase-shift compensation to substantially reduce the penalty from self-phase-modulation during nonlinear transmission.

3. The method of claim 1 wherein the ASK modulation generates chirp-free optical signals.

4. The method of claim 1 wherein the ASK modulation generates chirped optical signals.

5. The method of claim 1 wherein the ASK modulation has an extinction ratio of between about 5 dB and about 10 dB.

6. The method of claim 1 wherein the first modulator comprises a Mach-Zehnder modulator.

7. The method of claim 1 wherein the first modulator generates a DPSK-modulated signal and the second modulator performs ASK modulation on the DPSK-modulated signal.

8. An optical transmission system including a first modulator (130) adapted to receive a first data signal (135) and a second modulator (150) adapted to receive a second data signal (155), **characterized in that**:
the first and second data signals (135, 155) are synchronous and have the same data rate;
the first modulator (130) is adapted to perform differential-phase-shift-keying (DPSK) modulation; and
the second modulator (150) is adapted to perform amplitude-shift-keying (ASK) modulation and is coupled to the first modulator,
whereby the optical transmission system generates a multilevel coded optimal signal.

9. The system of claim 8 further comprising a pulse generator operatively coupled to the second modulator to allow for generation ofRZ optical signals.

10. The system of claim 8 further **characterized by** means for providing post nonlinear-phase-shift compensation to substantially reduce the penalty from self-phase-modulation during nonlinear transmission.

11. The system of claim 8 wherein the ASK modulation generates chirp-free optical signals.

12. The system of claim 8 wherein the ASK modulation generates chirped optical signals.

13. The system of claim 8 wherein the ASK modulation has an extinction ratio of between about 5 dB and about 10 dB.

14. The system of claim 8 wherein the first modulator comprises a Mach-Zehnder modulator.

15. The system of claim 8 wherein the first modulator generates a DPSK-modulated signal and the second modulator performs ASK modulation on the DPSK-modulated signal.

16. The system of claim 8 further comprising a receiver (175) including a balanced detector (194) for detection of a DPSK portion of the multilevel coded optical signal.

17. The system of claim 16 wherein the receiver (175) includes a delay interferometer (192).

18. The system of claim 17 wherein:
the multilevel coded optical signal is a 4-ary DP-ASK modulated signal, and
the receiver (175) includes an optical intensity receiver (198) for detection of an ASK portion of the multilevel coded optical signal.

## Patentansprüche

1. Kommunikationsverfahren für eine multiniveau-kodierte optische Signalübertragung, welche den Schritt des Ansteuerns von mindestens zwei Modulatoren (130, 150) mit jeweiligen Datensignalen (135, 155) aufweist, um ein multiniveau optisches Signal zu erzeugen, **gekennzeichnet durch** die folgenden Schritte:
Durchführen einer Modulation mit differenzieller Phasenumtastung (DPSK) mit einem ersten Modulator (130) gemäß einem ersten Datensignal (135); und
Durchführen einer Modulation mit Amplitudenumtastung (ASK) mit einem zweiten Modulator (150) gemäß einem zweiten Datensignal (155),
wobei das erste und das zweite Datensignal (135, 155) synchron sind und die gleiche Datengeschwindigkeit aufweisen.

2. Verfahren nach Anspruch 1, weiterhin durch den Schritt des Bereitstellens einer nichtlinearen Nachkompensation der Phasenverschiebung **gekennzeichnet**, um den Verlust durch eine Phasenselbstmodulation während einer nichtlinearen Übertragung wesentlich zu reduzieren.

3. Verfahren nach Anspruch 1, wobei die ASK-Modulation chirp-freie optische Signale erzeugt.

4. Verfahren nach Anspruch 1, wobei die ASK-Modulation gechirpte optische Signale erzeugt.

5. Verfahren nach Anspruch 1, wobei die ASK-Modulation ein Auslöschungsverhältnis zwischen ungefähr 5 dB und ungefähr 10 dB aufweist.

6. Verfahren nach Anspruch 1, wobei der erste Modulator einen Mach-Zehnder-Modulator umfasst.

7. Verfahren nach Anspruch 1, wobei der erste Modulator ein DPSK-moduliertes Signal erzeugt und der zweite Modulator eine ASK-Modulation auf dem DPSKmodulierten Signal durchführt.

8. Optisches Übertragungssystem, umfassend einen ersten Modulator (130), welcher eingerichtet ist, ein erstes Datensignal (135) zu empfangen, und einen zweiten Modulator (150), welcher eingerichtet ist, ein zweites Datensignal (155) zu empfangen, **dadurch gekennzeichnet, dass**:
das erste und das zweite Datensignal (135, 155) synchron sind und die gleiche Datengeschwindigkeit aufweisen;
der erste Modulator (130) eingerichtet ist, um eine Modulation mit differenzieller Phasenumtastung (DPSK) durchzuführen; und
der zweite Modulator (150) eingerichtet ist, um eine Modulation mit Amplitudenumtastung (ASK) durchzuführen und an den ersten Modulator angekoppelt ist,
wodurch das optische Übertragungssystem ein multiniveau-kodiertes optisches Signal erzeugt.

9. System nach Anspruch 8, weiterhin umfassend einen Impulserzeuger, welcher wirksam an den zweiten Modulator angekoppelt ist, um eine Erzeugung optischer RZ-Signale zu gestatten.

10. System nach Anspruch 8, weiterhin **gekennzeichnet durch** Mittel zum Bereitstellen einer nichtlinearen Nachkompensation der Phasenverschiebung, um den Verlust **durch** eine Phasenselbstmodulation während einer nichtlinearen Übertragung wesentlich zu reduzieren.

11. System nach Anspruch 8, wobei die ASK-Modulation chirp-freie optische Signale erzeugt.

12. System nach Anspruch 8, wobei die ASK-Modulation gechirpte optische Signale erzeugt.

13. System nach Anspruch 8, wobei die ASK-Modulation ein Auslöschungsverhältnis zwischen ungefähr 5 dB und ungefähr 10 dB aufweist.

14. System nach Anspruch 8, wobei der erste Modulator einen Mach-Zehnder-Modulator umfasst.

15. System nach Anspruch 8, wobei der erste Modulator ein DPSK-moduliertes Signal erzeugt und der zweite Modulator eine ASK-Modulation auf dem DPSK-modulierten Signal durchführt.

16. System nach Anspruch 8, weiterhin umfassend einen Empfänger (175), welcher einen symmetrischen Detektor (194) zur Erkennung eines DPSK-Abschnitts des multiniveau-kodierten optischen Signals umfasst.

17. System nach Anspruch 16, wobei der Empfänger (175) ein Verzögerungsinterferometer (192) umfasst.

18. System nach Anspruch 17, wobei:
das multiniveau-kodierte optische Signal ein 4-ary DP-ASK-moduliertes Signal ist, und
der Empfänger (175) einen optischen Intensitätsempfänger (198) zur Erkennung eines ASK-Abschnitts des multiniveau-kodierten optischen Signals umfasst.

## Revendications

1. Procédé de communication pour la transmission de signaux optiques codés de niveaux multiples qui comporte l'étape de commande d'au moins deux modulateurs (130, 150) avec des signaux de données respectifs (135, 155) afin de générer un signal optique de niveaux multiples, **caractérisé par** les étapes consistant à :
exécuter une modulation par déplacement de phase différentielle (DPSK) avec un premier modulateur (130) en fonction d'un premier signal de données (135) ; et
exécuter une modulation par déplacement d'amplitude (ASK) avec un deuxième modulateur (150) en fonction d'un second signal de données (155),
dans lequel les premier et second signaux de données (135, 155) sont synchrones et ont le même débit de données.

2. Procédé selon la revendication 1, **caractérisé en outre par** l'étape de fourniture d'une post-compensation de déplacement de phase non linéaire afin de réduire sensiblement la pénalité de l'auto-modulation de phase durant une transmission non linéaire.

3. Procédé selon la revendication 1, dans lequel la modulation ASK génère des signaux optiques dépourvus de compression d'impulsions.

4. Procédé selon la revendication 1, dans lequel la modulation ASK génère des signaux optiques à compression d'impulsions.

5. Procédé selon la revendication 1, dans lequel la modulation ASK présente un rapport d'extinction entre environ 5 dB et environ 10 dB.

6. Procédé selon la revendication 1, dans lequel le premier modulateur comprend un modulateur de Mach-Zehnder.

7. Procédé selon la revendication 1, dans lequel le premier modulateur génère un signal à modulation DPSK et le second modulateur effectue une modulation ASK sur le signal à modulation DPSK.

8. Système de transmission optique comportant un premier modulateur (130) adapté pour recevoir un premier signal de données (135) et un second modulateur (150) adapté pour recevoir un second signal de données (155), **caractérisé en ce que** :
les premier et second signaux de données (135, 155) sont synchrones et ont le même débit de données ;
le premier modulateur (130) est adapté pour exécuter une modulation par déplacement de phase différentielle (DPSK) ; et
le second modulateur (150) est adapté pour exécuter une modulation par déplacement d'amplitude (ASK) et est couplé au premier modulateur,
par lequel le système de transmission optique génère un signal optique codé de niveaux multiples.

9. Système selon la revendication 8, comprenant en outre un générateur d'impulsions couplé opérationnellement au second modulateur afin de permettre la génération de signaux optiques RZ.

10. Système selon la revendication 8, **caractérisé en outre par** un moyen de fourniture d'une post-compensation de déplacement de phase non linéaire afin de réduire sensiblement la pénalité de l'auto-modulation de phase durant une transmission non linéaire.

11. Système selon la revendication 8, dans lequel la modulation ASK génère des signaux optiques dépourvus de compression d'impulsions.

12. Système selon la revendication 8, dans lequel la modulation ASK génère des signaux optiques à compression d'impulsions.

13. Système selon la revendication 8, dans lequel la modulation ASK présente un rapport d'extinction entre environ 5 dB et environ 10 dB.

14. Système selon la revendication 8, dans lequel le premier modulateur comprend un modulateur de Mach-Zehnder.

15. Système selon la revendication 8, dans lequel le premier modulateur génère un signal à modulation DPSK et le second modulateur effectue une modulation ASK sur le signal à modulation DPSK.

16. Système selon la revendication 8, comprenant en outre un récepteur (175) comportant un détecteur équilibré (194) pour détecter une partie DPSK du signal optique codé de niveaux multiples.

17. Système selon la revendication 16, dans lequel le récepteur (175) comporte un interféromètre à retard (192).

18. Système selon la revendication 17, dans lequel :
le signal optique codé de niveaux multiples est un signal modulé DP-ASK 4-aire, et
le récepteur (175) comporte un récepteur d'intensité optique (198) pour la détection d'une partie ASK du signal optique codé de niveaux multiples.
